# EUROPEAN PATENT APPLICATION

(11) **EP 3 479 695 A1**
(43) Date of publication of application: **08.05.2019**
(21) Application number: 17200214.9
(22) Date of filing: 06.11.2017
(51) Int. Cl.: A01N 43/16, A01N 65/00, A01N 65/22, A01N 65/28, A01N 65/36, A01N 65/44

(54) **SYNERGISTIC COMPOSITION FOR UNIVERSAL INCREASE OF AGRICULTURAL PRODUCTION**

(71) Applicant: Clean Nature Solutions GmbH, 3550 Langenlois (AT)
(72) Inventor: Pachschwöll, Paul, 3500 Krems an der Donau (AT); Hettegger, Hubert, 3430 Tulin an der Donau (AT); Lisowsky, Thomas, 40789 Monheim (DE); Esser, Karlheinz, 41199 Mönchengladbach (DE)
(74) Representative: Remus, Alvaro Johannes

(57) **Abstract**

The present invention relates to a synergistic composition for stimulating the production of plant material, wherein said biostimulant composition comprises at least one essential oil ingredient and at least one flavonoid ingredient. The invention further concerns a method for stimulating the production of plant material and uses of the biostimulant composition, wherein a whole plant is topically treated with the biostimulant composition according to the invention at its surface or only certain parts (root, leaves, fruits, seeds etc.) by spray or dip application, fogging, washing or sprinkling. For example, coating carioca beans prior to seeding with the biostimulant composition according to the invention results in significant increase of root length, plant height and plant diameter after a single treatment.

## Description

### Background

The present invention relates to a synergistic composition for stimulating the production of plant material, wherein said biostimulant composition comprises at least one essential oil. The invention further concerns a method for stimulating the production of plant material and uses of the biostimulant composition.

### Prior art

On the basis of an increasing world population and an increasing demand for higher production of food and feed many different approaches have been developed and are currently already available on the world market for satisfying these needs. The constantly growing world population puts a strong pressure on both quality and quantity of agricultural output as well as on the generation of new, modern and both environmentally more friendly as well as safer agricultural auxiliaries.

However, due to the high volume of this global issue a balance between ecological and economic parameters is often not given. In order to maximize profit very often cheap synthetic fertilizers, plant growth stimulants, plant protecting agents, antimicrobial agents etc. are currently being used, in which a sustainable health maintenance of natural soil, organic production, contamination with often toxic chemicals etc. are neglected at the expense of an increase in crop yield and profit.

Currently certain plant protecting agents, broadband herbicides, plant growth regulators etc. are under consideration of being restricted or are already banned from use following the discovery of harmful side-effects, which is especially true for compounds such as nowadays glyphosate, as well as paclobutrazole or nitrofen in earlier time. These synthetic agents were shown to be of high toxicity, often cancerogenic and exceptionally harmful to the environment when used in sufficiently high concentration. In view of this it is of increasing importance to find compositions that come from entirely natural sources and contain only naturally occurring compounds.

In US 2015/0141250 A1 the use of a natural metabolite to increase crop production is disclosed. Herein the natural compounds are selected from the group consisting of adenosine, inosine, adenine, hypoxanthine, xanthine, uridine, uracil, (purine and pyrimidine derivatives) alone or combinations thereof, also together with fertilizers, plant growth regulators and bioactive compounds such as antimicrobial agents etc.

In WO 2016/081768 A1 the method of stimulating or promoting plant growth includes applying a composition of the synthetic pesticide ipfencarbazone to a crop plant in an amount that is sufficient to stimulate or promote plant growth.

CN 106431660 A discloses a biostimulant that is prepared from potassium fulvate, monopotassium phosphate, boric acid, chelated titanium, organosilicone, algin, alfalfa meal, nucleotides, chitosan and glycan polypeptide biotic potassium.

With respect to natural resources and biological agents CA 2891154 A1 discloses a biostimulant based on seaweed, comprising acid and alkaline treatment of algae. The process discloses incorporating American Leonardite mineral and subsequent spraying of the product. The invention comprises the composition obtained and its use as germination promoter, root stimulator, among others. This represents a step towards the right direction, in which natural resources instead of mineral oil based synthetic agents are used in the food and feed industry. However, seaweed fertilizers contain significant amounts of plant hormones, so-called auxins, which are not artificial, but nevertheless applied in unnaturally high concentrations.

As such, what art needs are compositions and methods that employ natural compounds to stimulate and increase crop production and overall agricultural output, in which also soil and plant health are maintained and any potential residues are safe and non-toxic to consumers.

### Summary of the invention

It is the object of the invention to overcome current limitations and disadvantages of the prior art, to provide a formulation and method being supposed to significantly and universally stimulate and increase agricultural production by a sustainable and long-lasting impulse after application.

The object of the invention is met by a synergistic biostimulant composition comprising
a. A flavonoid ingredient comprising at least one bioflavonoid compound and
b. An essential oil ingredient comprising at least one essential oil compound.

Surprisingly, it was found that a mixture comprising at least one bioflavonoid compound and at least one essential oil compound significantly and universally increases overall crop yield. Accordingly, the present invention relates to a new and highly efficient synergistic composition comprising a mixture of different secondary plant metabolites, namely bioflavonoids and essential oils, acting as a biostimulant. The biostimulant composition significantly and universally increases agricultural production by a sustainable and long-lasting impulse after application and eventually allows and promotes *inter alia* more flowering, higher transfer rate from flower to fruit, thus more fruits, bigger fruits, higher content of nutrients such as proteins, sugar, starch, bigger plants, more homogeneous growth of the fruits, earlier flower formation and generally higher crop yield as well as higher vitality of the respective plants, which eventually also results in higher resistance towards pesticides. Application of the present invention surprisingly results in both significantly enhanced vegetative and reproductive growth. The biostimulant composition according to the invention can be used as a standalone product or in combination with common agricultural techniques. The biostimulant composition may also be used in horticulture as well as home gardening besides agricultural purposes.

The at least one bioflavonoid compound is possibly but not exclusively selected from the group consisting of flavonoid glycosides or other polyphenols from the group of secondary plant metabolites and respective aglycons. Preferred examples of bioflavonoid compounds are glycosides of flavones, flavanones and glycosides of anthocyanidins as well as catechins and flavanols, flavonols, flavanonol, chalkone, isoflavonoids and flavan derivatives as well as theaflavins and anthoxanthins. Furthermore, the presence of two or more different flavonoids in the biostimulant composition may be advantageous in specific applications of the present invention. Thus one or more of these compounds may be present in addition to the at least one essential oil. The most preferred glycosides of flavanone include naringin, hesperidin, theaflavin or neohesperidin, in which naringin and neohesperidin and/or theaflavin are especially preferred.

When used as such the biostimulant composition according to the invention more specifically comprises a mixture of at least naringin and/or neohesperidin and/or theaflavin and at least one essential oil. The flavonoids described herein are biologically derived and may also be referred to as bioflavonoids. It is further believed that the presence of two or more bioflavonoids in the present synergistic biostimulant composition is advantageous. This is also based on practical considerations, as separation or previous purification of single flavonoids is very complex and thus costly.

Preferably the flavonoid compound is naturally occurring and derived from plant matter. In a preferred embodiment of the invention the suitable bioflavonoid is derived from citrus fruit plant extracts, including grapefruit, orange and tangerine, most preferably bitter orange extract, but also from extracts of berry fruit plants such as, but not limited to, raspberry, blueberry or purple grape, but also green and black tea extracts are possible.

In one preferred embodiment of the current invention the flavonoid ingredient is used in a concentration of 0.001-5% (weight), preferably 0.001-1% (weight), in particular 0.002-0.1% (weight), in relation to the total weight of the composition.

In one exemplary embodiment of the present invention the at least one essential oil compound is possibly but not exclusively selected from the group consisting of tea tree *(Melaleuca alternifolia)* oil, lavender *(Lavandula angustifolia)* oil, pine *(Pinus silvestris)* oil, kanuca *(Kunzea ericoides)* oil, eucalyptus *(Eucalyptus globulus)* oil, bergamot (Citrus *bergamia)* oil, lemon *(Citrus limoneum)* oil, lemon grass *(Cymbpogon citratus)* oil, rosemary *(Rosmarinus officialis)* oil, geranium (Pelargonium *graveoleus)* oil, mint oil or any other composition containing menthol and/or menthene, and any mixture thereof.

In one exemplary embodiment of the present invention the essential oil ingredient is used in a concentration of 0.001-5% (weight), preferably 0.001-1% (weight), in particular 0.002-0.1% (weight), in relation to the total weight of the composition.

These two active ingredients can be supplemented with other components to provide biostimulant compositions with multi-functioning properties.

According to a still further embodiment of the invention there is provided a biostimulant composition, which, besides at least one bioflavonoid ingredient and at least one essential oil ingredient, additionally comprises at least one type of organic acid as an additive. Such an acid can *inter alia* be used for adjusting the pH, acting as buffer component or exhibit further advantageous properties for the desired application.

In one exemplary embodiment, the organic acid can be included in concentrations from 0.001% to 10% (weight), preferably 0.01% to 1% (weight), in particular 0.02-0.6% (weight), in relation to the total weight of the composition.

The organic acids that may be used in preparing the biostimulant compositions of the present invention are either solid or liquid in their natural state and are readily soluble or dissolved in or miscible with water or an aqueous based solvent; however, if needed additional agents for solubilizing the organic acid in water such as emulsifiers, detergents etc. may be used as described below.

Exemplary acids include organic mono- and polyacids, fruit acids, especially carboxylic acids such as aldaric acid, ascorbic acid, benzoic acid, citric acid, citriconic acid, glutaric acid, itaconic acid, lactic acid, maleic acid, malic acid, malonic acid, salicylic acid, succinic acid, tartaric acid, and the like. Furthermore also fatty acids comprising linear chain lengths of 2 to 10 carbons in length can be used. These acids can be supplemented with the other active components to provide compositions with multi-functioning properties. Exemplary fatty acids of short and longer chain length are acetic acid, valeric acid, caprylic acid and other aliphatic fatty acids. Suitable fatty acids may additionally be provided as respective triglyceride oils, most preferably from natural plant oil sources, or as respective saponified salts together with glycerol. More preferably the fatty acid is of between 6 and 10 carbon atoms in length. Examples are depicted below.

In a further embodiment the present invention additionally comprises at least one type of metal ion as a supplement. The metal ion can *inter alia* function as nutrient agent to further support plant growth by presenting sufficient amounts of trace elements of the group of transition metals, preferably but not exclusively selected from the group consisting of manganese, iron, nickel, copper, zinc as well as alkali and alkaline earth metal ions. Suitable concentrations of these metal ions, preferably of at least one respective salt, are in the range of 0.001-10% (weight), preferably 0.001-1% (weight), in particular 0.01-0.5% (weight), in relation to the total weight of the composition. The metal ions are preferably used as salts with corresponding inorganic and/or organic counter-ions.

In another embodiment of the present invention at least one solubilizing agent and/or surfactant is added to the said biostimulant composition comprising at least one flavonoid compound as well as at least one essential oil compound in order to ensure proper dissolution of all ingredients/components and/or add additional positive and desired characteristics. The surfactant may be selected from the group consisting of anionic, cationic, zwitterionic as well as non-ionic detergents, and suitable mixtures thereof. Especially, alkylethersulfate, alkyl- and/or arylsulfonate, alkylsulfate, amphotensides, betaines, alkylamidoalkylamines, alkyl substituted amino acids, alkyl substituted imino acids, acylated amino acids, and amphotenside combinations can be used. In principle all tensides supporting a positive synergistic effect are suitable.

The above-mentioned solubilizing agent or surfactant, respectively, is added in a concentration of 0.001-20% (weight), preferably 0.01-1% (weight), in particular 0.01-0.5% (weight), in relation to the total weight of the composition.

In a further embodiment of the invention the solubilizing agent is selected from the group of alcohols, preferably aliphatic mono- or polyalcohols. The solubilizing agent is typically applied in a concentration of 0.01-20% (weight), preferably 0.01-1% (weight), in particular 0.01-0.1% (weight), in relation to the total weight of the composition.

In an especially preferred embodiment of the invention the said solubilizing agent is glycerol.

Accordingly, the invention-related biostimulant composition may comprise additional common conventional adjuvants and additives like, for example, suitable sticking and wetting agents, especially in order to render the composition suitable for specific applications, or buffer substances for defining a specific pH value.

If necessary, the pH value of the biostimulant composition according to the invention can be adjusted to a pH between 1.5 and 5 by the addition of suitable acids or buffer systems.

The ready-to-use inventive biostimulant composition can be used for all aspects of agricultural crop yield enhancement.

For example, a ready-to-use water-based biostimulant composition according to the invention comprising at least one type of flavonoid compound as well as at least one essential oil compound may include:
a. Water: 80-99.5% (weight)
b. Bioflavonoids: 0.005-0.05% (weight)
c. Essential oils: 0.005-0.05% (weight)
d. Glycerol: 0.01-0.1% (weight)
e. Surfactants: 0.01-0.1% (weight)
f. Organic acids: 0.05-0.5% (weight)
g. Metal salts: 0.001-0.05% (weight)

The ready-to-use biostimulant composition according to the invention can be used for all aspects of increase of agricultural production.

The synergistic biostimulant composition according to the invention can be provided, for example, as a 100fold to 10,000fold concentrate. For example, concentrated formulations of 100fold to 10,000fold may be used for production and shipment.

For example, a respective concentrate of the biostimulant composition according to the invention comprising at least one type of flavonoid compound as well as at least one essential oil compound may include:
a. Water: 20-70% (weight)
b. Bioflavonoids: 0.5-5% (weight)
c. Essential oils: 0.5-5% (weight)
d. Glycerol: 10-20% (weight)
e. Surfactants: 5-15% (weight)
f. Organic acids: 10-20% (weight)
g. Metal salts: 2-7.5% (weight)

Preferably the final diluted biostimulant composition e.g. for topical application to plants will contain between 98.0 and 99.9% by weight water; even such low concentrations of active components have been found to significantly stimulate the plant and increase e.g. crop yield etc.

Preferably the final diluted and ready-to-use biostimulant composition as described above is applied to plants during the cool of the day and preferably not prior to or just subsequent to rain, as this could possibly influence and reduce the efficacy of the synergistic biostimulant composition.

The object of the invention is further met by a method for stimulating production of plant material, wherein a whole plant is topically treated with the biostimulant composition according to the invention at its surface or only certain parts (root, leaves, fruits, seeds etc.) by spray or dip application, fogging, washing or sprinkling. In general, growth yield can be achieved by spraying the biostimulant composition according to the invention onto plants. The applied methods are however variable and can be adjusted to the different tasks, such as foliar spray on the surface, flower spray and other surface treatment methods known to a person skilled in the art.

According to one aspect of the invention, a method for treatment of a surface of a plant comprises the following steps: applying a biostimulant composition to the surface, wherein this composition comprises at least one flavonoid ingredient and at least one essential oil ingredient, as well as optionally further potential additives for each specific application.

A universal increase of agricultural production as used herein is defined as more flowering, higher transfer rate from flower to fruit, thus more fruits, bigger fruits, higher content of nutrients such as proteins, sugar, starch, bigger plants, more homogeneous growth of the fruits, earlier flower formation and generally higher crop yield. The universal increase is thus related to both the molecular level (e.g. sugar content) as well as the macroscopic level (whole plant size). These effects can be achieved by application of the present invention as mentioned above.

Universal increase within the invention is furthermore related to the plants, which are treated with the inventive synergistic composition, specifically referring to vegetables, fruits, nuts, grains, forages and ornamental crops, essentially all plants which are used in agricultural production, in which growth and crop yield is notably increased by application of said synergistic biostimulant composition comprising at least one flavonoid compound as well as at least one essential oil compound.

The universal increase in agricultural production as defined above is the most intrinsic and outstanding feature of the present invention. Usually certain agents are solely working on specific plants and/or plant parts (see for example UA65748U, in which sunflower seeds productivity is increased). The synergistic biostimulant composition of different secondary plant metabolites comprising at least one type of flavonoid compound as well as at least one type of essential oil compound for universal increase of agricultural production as defined by the present invention surprisingly works unexpectedly and extraordinarily well for all tested plants as defined in the examples section.

In one embodiment of the invention a whole plant is treated by spray or dip application of the biostimulant composition according to the invention.

In a preferred embodiment only the leaves are topically treated with said synergistic biostimulant composition, e.g. by foliar or flower spray.

In another embodiment of the invention seeds are treated with the biostimulant composition by spray or dip application.

In a further embodiment the roots of said plant are treated with the biostimulant composition by dip application.

In a further embodiment of the invention the bark of wooden plants is treated with the biostimulant composition according to the invention.

In one embodiment of the invention the said synergistic biostimulant composition is used together, and/or before and/or after common agricultural techniques known to a person skilled in the art. In a preferred embodiment said biostimulant composition comprising at least one flavonoid compound and at least one essential oil compound is used after common agricultural techniques.

The inventive biostimulant composition may also be used, but not limited to, in horticulture as well as home gardening besides agricultural purposes.

In another embodiment of the invention the synergistic biostimulant composition is also used before harvest.

In the following, the invention is non-limiting and exemplarily illustrated in detail with reference to accompanying figures and tables.

### Brief description of tables and drawings

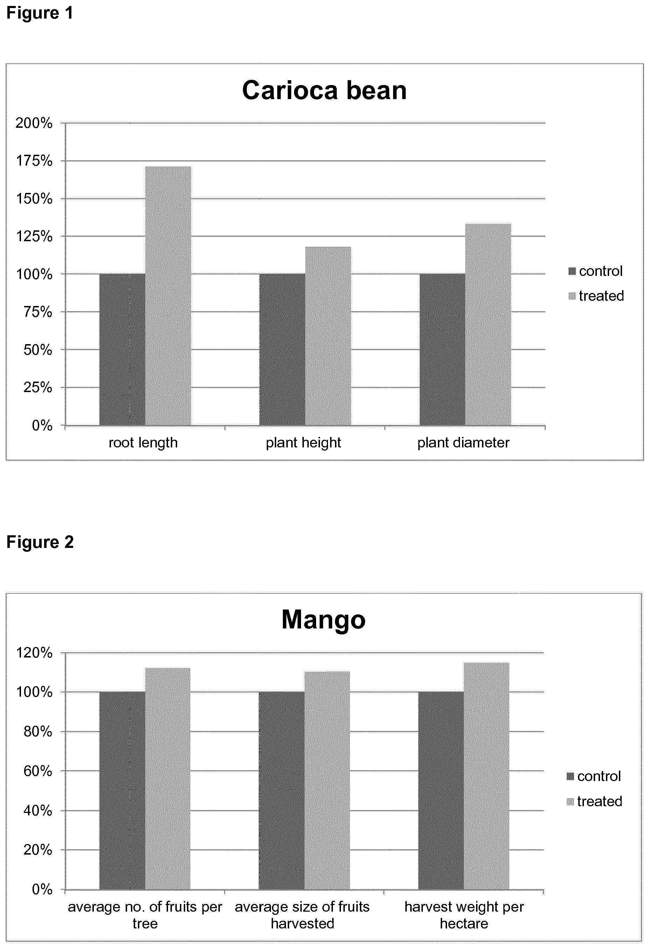

**Figure 1** shows the significant increase of root length, plant height and plant diameter after single treatment in case of carioca beans. Carioca beans have been coated prior to seeding with a biostimulant composition comprising
a. Water: 98.07% (weight)
b. Bioflavonoids: 0.08% (weight)
c. Essential oils: 0.08% (weight)
d. Glycerol: 0.6% (weight)
e. Surfactants: 0.38% (weight)
f. Organic acids: 0.57% (weight)
g. Metal salts: 0.22% (weight)
The quantity of solution applied was 2 L/ton of beans. For comparative purposes a current competitive market-leading product has been applied in a control field. The test was carried out on a total area of 90.000 m², of which 10.000 m² have been dedicated to the treatment with inventive biostimulant composition.

**Figure 2** shows a generally higher fruit set and a generally higher number of fruits harvested in case of mango treated three times with a total of 1500 L of a biostimulant composition comprising
a. Water: 99.878% (weight)
b. Bioflavonoids: 0.005% (weight)
c. Essential oils: 0.005% (weight)
d. Glycerol: 0.038% (weight)
e. Surfactants: 0.024% (weight)
f. Organic acids: 0.036% (weight)
g. Metal salts: 0.014% (weight)
Tests with mango have been carried out in different orchards in Brazil following the whole growing cycle from flowering till harvest. Other common fertilizer and plant protection steps were left unchanged for both treated and untreated areas. The results clearly show a higher fruit set and a generally higher number of fruits harvested (+12%), bigger size of harvested fruits (+11 %) with more homogenous fruit size distribution and overall higher weight of harvested fruits (+15%).

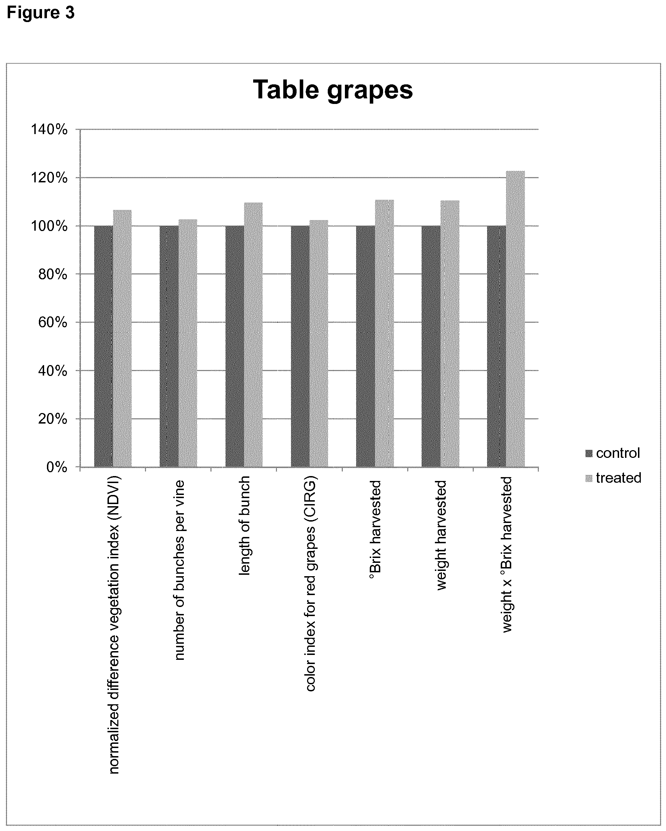

**Figure 3** shows the results of trials with table grapes. Tests have been carried out at different fields with different varieties of grapes in Brazil, following the whole growing cycle from bloom until harvest. Treatment with the biostimulant composition was carried out biweekly comprising
a. Water: 99.903% (weight)
b. Bioflavonoids: 0.004% (weight)
c. Essential oils: 0.004% (weight)
d. Glycerol: 0.030% (weight)
e. Surfactants: 0.019% (weight)
f. Organic acids: 0.029% (weight)
g. Metal salts: 0.011% (weight)
Other common fertilizer and plant protection steps were left unchanged for both treated and untreated samples. The results show a higher NDVI (+6.8%), higher number of bunches per plant (+2.9%), greater length of the bunches (+9.9%), better color index (+2.5%), higher °Brix (+11%), higher harvested weight (+10.8%) and an overall higher production of weight x kg sugar (+22.9%).

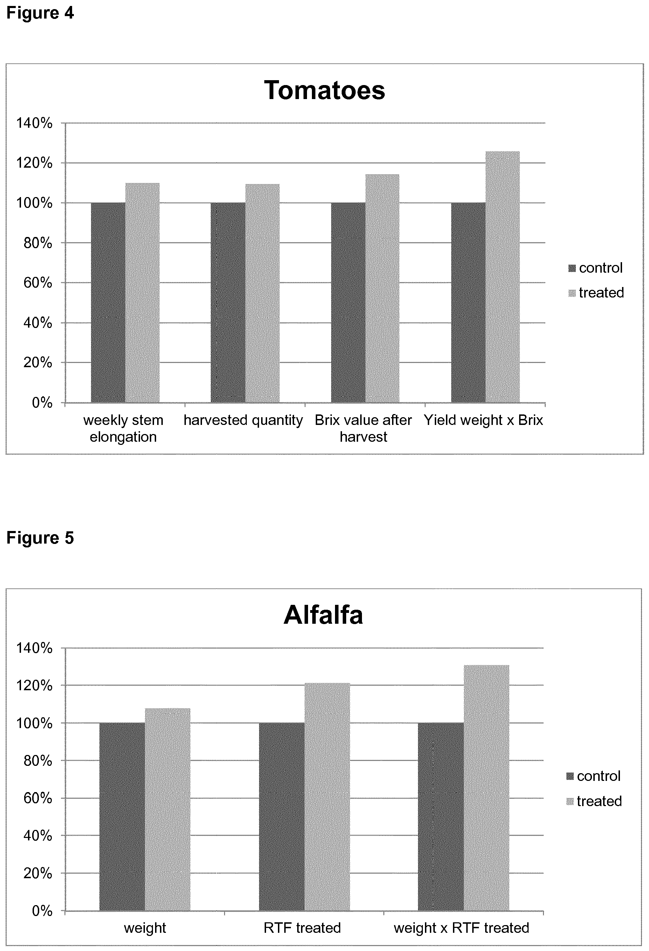

**Figure 4** shows a significant increase in stem elongation as well as higher yield by weight and a higher yield in °Brix in case of tomatoes. These trials with tomatoes have been carried out in different green houses in Turkey following the whole growing cycle of 32-34 weeks. Treatment with synergistic biostimulant composition was carried out weekly comprising
a. Water: 99.878% (weight)
b. Bioflavonoids: 0.005% (weight)
c. Essential oils: 0.005% (weight)
d. Glycerol: 0.038% (weight)
e. Surfactants: 0.024% (weight)
f. Organic acids: 0.036% (weight)
g. Metal salts: 0.014% (weight)
Overall 800 L of ready-to-use spraying biostimulant composition were applied per hectare. Other common fertilizer and plant protection steps were left unchanged for both treated and untreated samples. The results clearly show an increase in stem elongation (+10%) as well as higher yield by weight (+9.7%), higher °Brix (+14.6%) and in total weight x sugar (+25.8%).

**Figure 5** shows that a single treatment with the synergistic biostimulant composition leads to a significant increase of weight, relative feed value (RTF) per weight and yield weight x yield RTF in case of alfalfa. These trials have been carried out in South Dakota on a total area of 8 hectares, split into 6 plots / rows treated and 6 plots / rows untreated. A biostimulant composition was applied on the treated areas in addition to the conventional fertilizer program comprising
a. Water: 99.850% (weight)
b. Bioflavonoids: 0.006% (weight)
c. Essential oils: 0.006% (weight)
d. Glycerol: 0.047% (weight)
e. Surfactants: 0.030% (weight)
f. Organic acids: 0.044% (weight)
g. Metal salts: 0.017% (weight)
The same fertilizer program was also applied to respective untreated areas. Application was carried out 10 days after 3^{rd} cutting and the 4^{th} cutting has been evaluated for quantity in pounds per acre and for relative feed value (digestible fibers). The results show that already a single treatment with inventive biostimulant composition leads to a significant increase of weight (+8%), relative feed value per weight (+21%) and yield weight x yield RTF (+31%).

## Claims

1. Biostimulant composition comprising a flavonoid ingredient comprising at least one flavonoid compound and an essential oil ingredient comprising at least one essential oil compound.

2. Biostimulant composition according to claim 1, wherein the at least one flavonoid compound is selected from the group consisting of flavonoid glycosides and respective aglycons.

3. Biostimulant composition according to claim 1 or 2, wherein the at least one flavonoid compound is a flavone, flavanone, anthocyanidin, catechin, flavanol, flavonol, flavanonol, chalkone, isoflavonoid, flavan derivative, theaflavin or anthoxanthin.

4. Biostimulant composition according to any of claims 1 to 3, wherein the at least one flavonoid compound is naringin, hesperidin, neohesperidin or theaflavin.

5. Biostimulant composition according to any of claims 1 to 4, wherein the flavonoid ingredient is included in a concentration between 0.001 and 5% (weight), preferably 0.001 and 1% (weight), in particular 0.002 and 0.1% (weight), in relation to the total weight of the composition.

6. Biostimulant composition according to any of claims 1 to 5, wherein the at least one essential oil compound is selected from the group consisting of tea tree *(Melaleuca alternifolia)* oil, lavender *(Lavandula angustifolia)* oil, pine *(Pinus silvestris)* oil, kanuca *(Kunzea ericoides)* oil, eucalyptus *(Eucalyptus globulus)* oil, bergamot (Citrus *bergamia)* oil, lemon *(Citrus limoneum)* oil, lemon grass *(Cymbpogon citratus)* oil, rosemary *(Rosmarinus officialis)* oil, geranium (Pelargonium *graveoleus)* oil, mint oil, and any mixture thereof.

7. Biostimulant composition according to any of claims 1 to 6, wherein the essential oil ingredient is included in a concentration between 0.001 and 5% (weight), preferably 0.001 and 1% (weight), in particular 0.002 and 0.1% (weight), in relation to the total weight of the composition.

8. Biostimulant composition according to any of claims 1 to 7, further comprising at least one type of organic acid, preferably in a concentration between 0.001 % and 10% (weight), preferably 0.01% and 1% (weight), in particular 0.02 and 0.6% (weight), in relation to the total weight of the composition.

9. Biostimulant composition according to any of claims 1 to 8, further comprising additives, adjuvants, detergents, coupling agents, micronutrient metal salts, solubilizing, sticking or wetting agents, surfactants, buffer substances, and/or substances for adjusting the pH.

10. Biostimulant composition according to any of claims 1 to 9, further comprising at least one type of metal ion, preferably selected from the group consisting of manganese, iron, nickel, copper, zinc, alkali and alkaline earth metal ions.

11. Biostimulant composition according to claim 10, wherein at least one salt of the metal ion is included in a concentration between 0.001 and 10% (weight), preferably 0.001 and 1% (weight), in particular 0.01 and 0.5% (weight), in relation to the total weight of the composition.

12. Method for stimulating production of plant material, wherein a plant is topically treated with the biostimulant composition according to any of claims 1 to 11 at its surface or certain parts by spray or dip application, fogging, washing or sprinkling.

13. Use of the biostimulant composition according to any of claims 1 to 11 for stimulating production of plant material in agriculture, horticulture or home gardening.

14. Use of the biostimulant composition according to any of claims 1 to 11 for achieving higher resistance of plant material towards pesticides.

15. Method according to claim 12 or use according to claim 13 or 14, wherein the plant material is selected from the group consisting of vegetables, fruits, nuts, grains, forages, and ornamental crops.
